# FASCICULE DE BREVET EUROPEEN

(11) **EP 1 569 788 B1**
(45) Date de publication et mention de la délivrance du brevet: **10.02.2010**
(21) Numéro de dépôt: 03815108.0
(22) Date de dépôt: 10.12.2003
(51) Int. Cl.: B29D 22/00, B29C 45/26, F16J 3/04, B29D 1/00, B29C 45/16

(54) **PROCÉDÉ DE FABRICATION D'UNE ENVELOPPE À SOUFFLETS DE PROTECTION DE DISPOSITIF DE TRANSMISSION ET ENVELOPPE OBTENUE PAR LA MISE EN OEUVRE DU PROCÉDÉ**
VERFAHREN ZUR HERSTELLUNG EINES SCHUTZBALGS FÜR EINE GETRIEBEVORRICHTUNG UND DURCH DAS VERFAHREN ERHALTENER SCHUTZBALG
METHOD FOR MAKING A PROTECTIVE BELLOWS FOR A TRANSMISSION DEVICE AND PROTECTIVE BELLOWS OBTAINED BY SAID METHOD

(30) Priorité: 13.12.2002 FR 0215850
(43) Date de publication de la demande: 07.09.2005
(73) Titulaire: RZ Engineering, 53810 Change (FR)
(72) Inventeur: RENZO, Bernard, F- 53000 LAVAL (FR)
(74) Mandataire: Laget, Jean-Loup
(86) Numéro de dépôt international: PCT/FR2003/003653
(87) Numéro de publication internationale: WO 2004/062895

(56) Documents cités:
- EP-A- 0 647 790
- DE-U- 29 519 333
- FR-A- 2 596 693
- FR-A- 2 606 849
- US-A- 4 988 113
- US-A- 5 006 376

## Description

La présente invention concerne un procédé de fabrication d'une enveloppe à soufflets de protection de dispositif de transmission, tel qu'un joint de transmission, comprenant au moins deux arbres déplaçables axialement et/ou angulairement l'un par rapport à l'autre, cette enveloppe à soufflets, dont au moins une partie des soufflets sont radiaux, présentant à chaque extrémité ouverte une section de fixation au dispositif de transmission, ainsi qu'une enveloppe à soufflets de protection obtenue notamment par la mise en oeuvre du procédé précité.

Différents systèmes de transmission de mouvement d'un arbre menant à un arbre mené sont actuellement mis en oeuvre, de préférence par joint à cardan, en particulier dans l'industrie automobile où l'on fait de plus en plus appel, pour l'entraînement des roues à partir du moteur, à des dispositifs de joints homocinétiques. Dans de tels dispositifs de joint, un ensemble mécanique est lubrifié en permanence par une masse de graisse qui est enfermée dans un soufflet de protection. Celui-ci doit pouvoir d'une part se déformer élastiquement dans plusieurs directions et d'autre part conserver ses propriétés nonobstant les multiples causes d'endommagements qui peuvent apparaître au cours de la vie du véhicule. En effet, il est connu de longue date que l'endommagement des soufflets est dû en particulier aux chocs provoqués par des projections de parties de revêtement routier qui entraînent des amorces de fissures du matériau élastomère utilisé, ou au frottement des spires de soufflet les unes contre les autres.

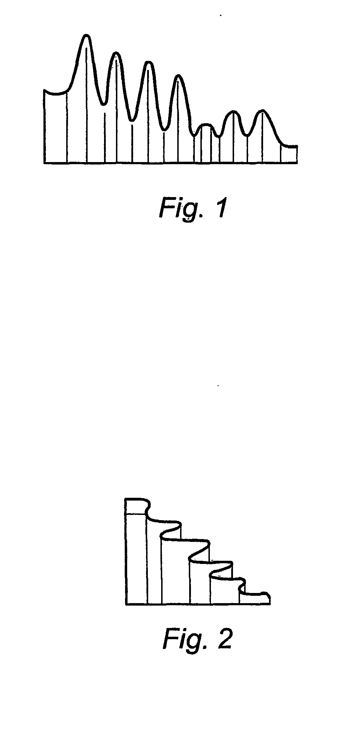

Il existe dans l'état de la technique deux familles d'enveloppes à soufflet, à savoir d'une part les enveloppes à soufflets de protection dont les soufflets sont dits axiaux, comme l'illustre la figure 2, de manière à permettre essentiellement une petite déformation axiale dudit soufflet, d'autre part les enveloppes à soufflets radiaux (figure 1) autorisant des déplacements radiaux, axiaux et angulaires du dispositif de transmission. Dans le cas de soufflets axiaux, la paroi de l'enveloppe est formée d'ondulations ou de plis dont les flancs s'étendent sensiblement parallèlement à l'axe longitudinal de ladite enveloppe (voir figure 2). Ce type d'enveloppe présente l'avantage d'être aisé à fabriquer en raison de l'absence de contre-dépouilles. Ainsi, pour ce type d'enveloppes à soufflet, de nombreuses techniques de fabrication peuvent être utilisées. Toutefois, les enveloppes à soufflet les plus usitées aujourd'hui sont celles décrites à la figure 1 du fait de leurs possibilités de déformation. Dans ce cas, au moins une partie des soufflets de ladite enveloppe sont radiaux. Dans cette seconde famille d'enveloppes à soufflets, le corps de l'enveloppe, constitué d'un corps tubulaire organisé autour d'un axe longitudinal à ladite enveloppe, est délimité par une paroi ondulée dont les flancs des plis s'étendent sensiblement dans une direction essentiellement radiale par rapport à l'axe longitudinal de ladite paroi. Cette disposition des plis des soufflets autorise à la fois une déformation axiale et angulaire du soufflet rendant de telles enveloppes à soufflet applicables à un grand nombre de mécanismes de transmission.

Pour permettre une déformation optimale d'une telle enveloppe à soufflets, ces enveloppes ont pendant longtemps été réalisées par moulage ou injection de caoutchouc vulcanisé. Toutefois, du fait de la faible résistance mécanique du caoutchouc, les fabricants ont été tentés de remplacer le caoutchouc par des matériaux à plus grande caractéristique de rigidité. Il en a résulté que les techniques habituellement applicables au caoutchouc ont été remplacées par des techniques d'injection/soufflage telles que décrites dans le brevet FR-A-2.610.566. Outre la technique d'injection soufflage décrite dans le brevet FR-A-2.610.566, d'autres techniques de soufflage ont été développées. Ainsi, généralement et comme l'illustre le brevet FR-A-2.606.849, lors de la fabrication, la paraison, constituée d'un tube en élastomère thermoplastique à l'état pâteux, est soufflée. L'élastomère thermoplastique vient se plaquer sur les parois froides du moule qui représentent la surface externe du soufflet. En s'ouvrant, les deux parties du moule libèrent le soufflet obtenu. Ce procédé de soufflage représente un mode de fabrication complexe et coûteux qui n'est pas encore maîtrisé d'un point de vue de la qualité. En effet, la répartition correcte de l'épaisseur de matière le long du soufflet est difficile à obtenir car dépendante de nombreux facteurs. Il en résulte la nécessité d'une part d'utiliser un excès de matière afin de garantir une épaisseur minimum, d'autre part de prévoir un contrôle unitaire des pièces.

On est donc à la recherche aujourd'hui de procédés permettant la fabrication d'enveloppes à soufflets présentant des soufflets radiaux avec des contre-dépouilles importantes et réalisés en un matériau relativement rigide, en particulier pour résister à des températures élevées et accroître la résistance mécanique de ladite enveloppe.

Le modèle d'utilité allemand DE-295 19 333 décrit un procédé de fabrication d'une enveloppe à soufflets à l'aide d'un moule en creux et d'un noyau, le démoulage étant obtenu par dévissage relatif de l'enveloppe et du noyau. Dans ce document, l'enveloppe à soufflets obtenue est une enveloppe cylindrique. Par ailleurs, ce document est muet sur les dimensions relatives des sections du noyau et de l'enveloppe. Dans ce document, aucune solution n'est suggérée pour réduire le temps de démoulage qui est nécessairement long puisque dans le cas d'une enveloppe à soufflets cylindriques, il est nécessaire d'attendre le refroidissement complet de la matière avant de dévisser **pour éviter de détériorer la pièce.**

Le document US-5.006.376 décrit un procédé de fabrication d'un soufflet tronconique par injection, ledit soufflet étant démoulé à force par déformation du soufflet.

Un but de la présente invention est donc de proposer un procédé de fabrication d'une enveloppe à soufflets dont la mise en oeuvre permet la fabrication par injection d'une enveloppe à soufflets présentant des soufflets radiaux de forme quelconque, ladite enveloppe étant obtenue au moyen d'un matériau de rigidité quelconque apte à résister en particulier à des températures élevées et apte à présenter une résistance mécanique importante.

Un autre but de la présente invention est de proposer une enveloppe à soufflets dont la conception permet des déformations radiales, axiales et/ou angulaires des soufflets sans nuire à la durée de vie de ladite enveloppe.

A cet effet, l'invention a pour objet un procédé de fabrication d'une enveloppe à soufflets de protection de dispositif de transmission, selon la revendication 1.

Grâce au.procédé de fabrication de l'enveloppe qui comporte une étape de démoulage au cours de laquelle, après ouverture du moule en creux, il est procédé à un démoulage de l'enveloppe par dévissage relatif de l'enveloppe et du noyau, il en résulte la possibilité de fabriquer des enveloppes à soufflets de protection dont au moins une partie des soufflets sont radiaux, le matériau utilisé pouvant être un matériau de rigidité élevée, les soufflets pouvant présenter des formes quelconques.

L'invention a encore pour objet une enveloppe à soufflets de protection de dispositif de transmission, selon la revendication 7.

L'invention sera bien comprise à la lecture de la description suivante d'exemples de réalisation, en référence aux dessins annexés dans lesquels :
les figures 1 et 2 représentent des vues schématiques partielles en coupe d'enveloppes à soufflets conformes à l'état de la technique ;
la figure 3 représente une vue schématique partielle en coupe d'un mode de réalisation d'une enveloppe à soufflets conforme à l'invention ;
la figure 4 représente une demi-section longitudinale de l'outillage nécessaire pour le moulage d'une enveloppe à soufflets conforme à la figure 3 ;
la figure 5 représente une vue partielle en coupe d'une enveloppe à soufflets comportant deux zones de spires hélicoïdales de pas inversé selon une variante de l'invention et
la figure 6 représente une demi section longitudinale partielle d'une enveloppe à soufflets dans laquelle chaque soufflet est constitué de passages spiralés multiples.

Comme mentionné ci-dessus, l'invention a essentiellement pour objet un procédé de fabrication d'une enveloppe 1 à soufflets 2 de protection de dispositif d'accouplement extensible ou flexible, en particulier de dispositif de transmission. Cette enveloppe 1 à soufflets 2, 2A, dont les applications ne seront pas décrites plus en détail ci-après, est constituée d'un corps tubulaire ouvert à chacune de ses extrémités et dont la paroi, organisée autour d'un axe XX', est, entre lesdites extrémités, ondulée sur au moins une partie de sa longueur pour délimiter une pluralité de soufflets 2, 2A, chaque pli correspondant à un soufflet. Les extrémités du corps, de dimension généralement différente, constituent une section 3A, 3B de fixation au dispositif de transmission. Généralement, à l'état monté sur le dispositif de transmission, les sections de fixation de l'enveloppe sont fixées au dispositif par l'intermédiaire de collier, de bague ou similaire. Les plis du corps, et en particulier le sommet de ces plis constituant la nervure des soufflets, décrivent une hélice qui s'étend d'une section 3A de fixation à une autre 3B autour de l'axe longitudinal du corps. Au moins une partie de ces plis, destinés à constituer les soufflets, sont conformés de manière à former des soufflets 2 dits radiaux. Ainsi, les flancs desdits soufflets s'étendent à chaque fois de manière sensiblement perpendiculaire à l'axe longitudinal dudit corps.

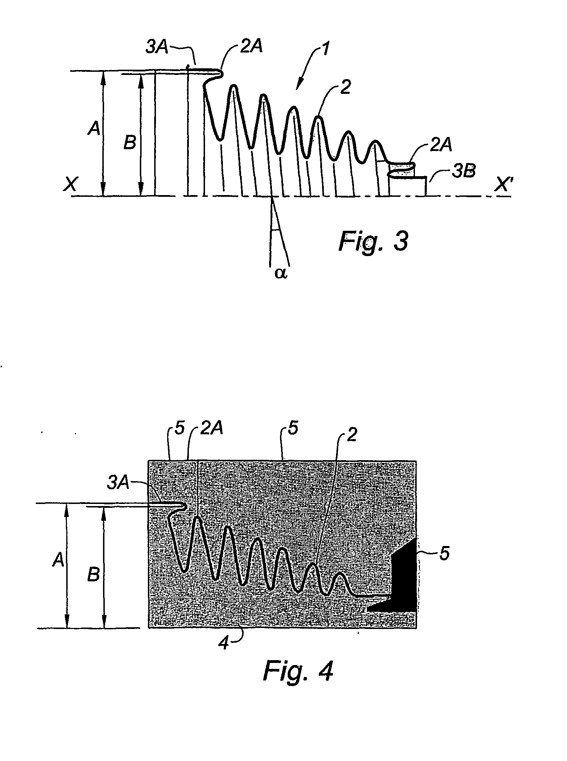

Pour permettre la fabrication d'une telle enveloppe à soufflets de protection en particulier radiaux, il convient de disposer, comme l'illustre la figure 4, d'un outillage constitué d'une part d'un moule 5 en creux, formé par exemple de deux demi-coquilles ou d'un nombre supérieur d'éléments susceptibles d'être rapprochés l'un de l'autre pour délimiter une cavité fermée, et d'au moins un noyau 4. Les demi-coquilles ou la carcasse constitutive du moule 5 en creux et le ou les noyaux présentent chacun au moins un filetage hélicoïdal complémentaire délimitant l'espace de moulage. Le démoulage de l'enveloppe 1 est obtenu, après ouverture du moule 5 en creux, par dévissage relatif de l'enveloppe 1 et du noyau 4. On obtient ainsi une enveloppe monobloc exempte de plan de joint intérieur axial. Ce dévissage peut s'effectuer de manière entièrement automatique. Le mouvement permettant un dévissage de l'enveloppe 1 du noyau 4 est soit appliqué au noyau 4 pour dévisser le noyau 4 de l'enveloppe 1, soit à l'enveloppe pour dévisser l'enveloppe du noyau. De préférence, l'enveloppe 1 est immobilisée au cours du dévissage du noyau 4. A chaque fois, dans ce cas, la partie non soumise à un mouvement d'entraînement en déplacement peut être maintenue en position par exemple par l'intermédiaire d'une ventouse, d'une pince ou similaire. En conclusion, l'enveloppe et/ou le noyau comporte(nt) au moins une zone destinée soit à reprendre un couple mécanique lors du dévissage, soit à permettre un blocage en rotation. Cette zone peut être définie par des oreilles diamétralement opposées disposées sur le pourtour extérieur de ladite enveloppe. L'enveloppe peut également être dévissée automatiquement par application d'une pression pneumatique de préférence sur une portion entre le noyau et l'enveloppe. Cette pression pneumatique est transmise par l'intermédiaire d'au moins un canal traversant le noyau de moulage.

Généralement, on moule par injection l'enveloppe 1 à partir d'un thermoplastique ou d'un élastomère thermoplastique ayant une dureté de préférence au moins égale à 60 shores D.

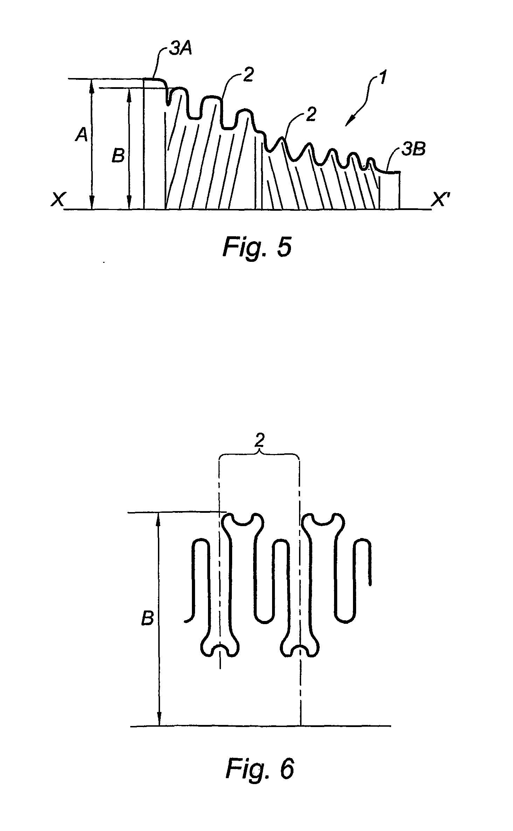

Pour autoriser un démoulage par dévissage, on choisit la plus grande section du ou des noyau(x) 4 d'un diamètre inférieur ou égal à la section de passage de la section 3A de fixation de plus grande dimension de l'enveloppe 1 à soufflets 2, 2A. On donne au (x) noyau (x) 4 et à la carcasse du moule 5 une allure tronconique. Il est également possible de mouler l'enveloppe 1 à l'aide d'au moins deux noyaux 4 présentant chacun un filetage hélicoïdal à pas différencié, voire inversé, de préférence croissant en direction de la partie de noyau destinée à s'étendre au voisinage de la section 3A de fixation de plus grande dimension de l'enveloppe 1. Pour faciliter le démoulage, la plus grande section du premier noyau est inférieure à la plus petite section du second noyau. On obtient ainsi une enveloppe qui peut être conforme à celle représentée à la figure 5 dans laquelle les pas sont orientés en sens opposé d'un noyau 4 à un autre. Il est également possible de choisir un noyau délimitant des passages spiralés des soufflets de largeur croissante de la section 3B de fixation de plus petite dimension vers la section 3A de plus grande dimension. Cette largeur peut ainsi évoluer jusqu'à 15 % par tour de filet. Elle augmentera généralement de 1 à 3 % par tour de filet.

Bien évidemment, en fonction de la forme des filetages hélicoïdaux ménagés sur le noyau 4 et le moule 5, un grand nombre de formes peuvent être obtenues au niveau des soufflets 2 de l'enveloppe 1. Un exemple de réalisation est fourni à la figure 6. La fabrication de telles enveloppes par injection permet également de faire varier à volonté l'épaisseur desdites parois des soufflets 2. Ainsi, chaque soufflet peut avoir une zone renforcée, ou à l'inverse amincie, au niveau de la jonction d'un soufflet avec un soufflet adjacent dans la zone de creux entre deux soufflets. Il est possible également de réaliser des soufflets dont les flancs sont constitués pour l'un d'une face concave, pour l'autre d'une face convexe. Il en résulte de plus grands débattements de la spire.

Les enveloppes 1 à soufflets 2, 2A qui résultent d'un tel procédé de fabrication peuvent affecter un grand nombre de formes. Chaque enveloppe 1 se présente toutefois sous la forme d'un corps monobloc exempt de plan de joint intérieur axial. Cette enveloppe est constituée d'un corps tubulaire organisé autour d'un axe XX' et dont les extrémités sont ouvertes. Chaque extrémité ouverte est destinée à constituer une section 3A, 3B de fixation de l'enveloppe 1 au dispositif de transmission. Ce corps tubulaire de l'enveloppe est délimité sur au moins une partie de sa longueur par une paroi ondulée ou plissée. Chaque pli correspond à un soufflet. Les plis ou nervures des soufflets entre lesdites sections 3A, 3B peuvent ainsi décrire une hélice à pas constant ou variable, de préférence croissant en direction de la section 3A de fixation de plus grande dimension de l'enveloppe 1. Dans l'exemple représenté à la figure 3, l'hélice présente un angle α correspondant sensiblement à l'angle formé par l'axe du pli constituant le soufflet radial avec un axe perpendiculaire à l'axe XX' longitudinal du corps. Ces plis peuvent être orientés de manière telle que les flancs des plis s'étendent sensiblement radialement par rapport à l'axe longitudinal du corps d'enveloppe ou axialement par rapport à ce dernier. Une combinaison des deux peut également être obtenue comme l'illustre en particulier la figure 3. Indépendamment du nombre de soufflets radiaux en disposition hélicoïdale ou de soufflets 2A axiaux, il est primordial que la section 2A de fixation de plus grande dimension de l'enveloppe 1 présente une section de passage supérieure ou égale au diamètre délimité par le sommet du soufflet de plus grande dimension. Ainsi, dans l'exemple représenté à la figure 3, la référence B correspond au rayon du soufflet de plus grande dimension tandis que la référence A correspond à la moitié de la section 3A de fixation de plus grande dimension. A est donc nécessairement supérieur à B.

Selon l'invention, les soufflets sont, depuis la section 3B de plus petite dimension vers la section 3A de plus grande dimension, de diamètre progressif, inscrits dans un tronc de cône. Ces soufflets 2 radiaux peuvent être constitués de passages spiralés simples ou multiples. La figure 6 illustre un exemple où chaque soufflet 2 est constitué de deux plis successifs de formes différentes. Il est à noter que, pour réduire le temps de dévissage de l'enveloppe 1 à soufflets 2 lors de la phase de démoulage, il est préférable d'avoir un grand pas d'hélice. Mais, plus le pas est grand, moins il y a de spires sur une même longueur de soufflet. Or, la flexibilité du soufflet croît avec le nombre de spires. Ainsi, pour conserver la flexibilité tout en ayant un grand pas d'hélice, il est préférable de disposer sur le soufflet au moins un filet supplémentaire de spires. Chaque filet peut ainsi posséder sa propre forme de spire.

Dans le cas d'un soufflet possédant plusieurs filets de spire, ces filets peuvent être réalisés avec des diamètres différents de spires. Il est ainsi possible d'obtenir une alternance de niveaux des creux et des crêtes de spires. Ainsi, grâce au procédé de fabrication précité, l'enveloppe à soufflets peut comporter, au niveau des soufflets, des soufflets dont les spires forment des spires hélicoïdales différentes soit au niveau du profil retenu pour la réalisation des spires, soit au niveau de la dimension des spires, soit au niveau du pas de l'hélice, soit au niveau de l'orientation de ce pas. Bien évidemment, ces facteurs peuvent être combinés. Il en résulte un grand nombre de réalisations possibles pour lesdites enveloppes.

Dans le cas particulier d'une enveloppe à soufflets comprenant deux zones de spires hélicoïdales à pas inversé d'une zone à une autre, le noyau est constitué de deux éléments. Le second élément de noyau correspondant à la zone de spires de pas inversé se dévisse dans le sens contraire du premier élément lors du démoulage de l'enveloppe. L'intérêt de disposer sur l'enveloppe à soufflets de zones de spires à pas inversé est de pouvoir compenser l'effet de vrillage d'une zone par l'autre zone qui a tendance à se vriller dans le sens contraire. En effet, les spires hélicoïdales tendent à vriller les soufflets de l'enveloppe lorsqu'elles sont étirées ou comprimées. L'effet de vrillage des soufflets de l'enveloppe peut être amoindri par une répartition adaptée des épaisseurs de spires.

Une telle enveloppe 1 à soufflets pourra être positionnée de manière classique sur un mécanisme de transmission. La fixation de la section 3A de plus grande dimension de l'enveloppe 1 à soufflets est généralement conçue pour assurer une parfaite étanchéité. En effet, généralement la graisse contenue dans l'enveloppe à soufflets est projetée vers la section 3B de fixation de plus grande dimension par l'action de la force centrifuge. La fixation de la section 3B de fixation de plus petite dimension est prévue pour être étanche à la graisse mais peut laisser passer de l'air et peut permettre un léger mouvement de rotation afin de compenser le vrillage du soufflet de l'enveloppe. Le soufflet peut ainsi comporter à cet effet une lèvre hélicoïdale. Chaque section 3A, 3B de fixation de l'enveloppe 1 peut également être constituée d'au moins deux matières bi-injectées. Ainsi, un élastomère thermoplastique peut être injecté à l'intérieur de la section de fixation de plus grande dimension pour obtenir une meilleure étanchéité. L'une des matières injectées peut être une matière apte à réfléchir un rayonnement thermique de manière telle qu'au moins une partie de l'enveloppe est recouverte d'un revêtement réfléchissant.

## Revendications

1. Procédé de fabrication d'une enveloppe (1) à soufflets (2, 2A) de protection de dispositif de transmission, tel qu'un joint de transmission, comprenant au moins deux arbres déplaçables axialement et/ou angulairement l'un par rapport à l'autre, cette enveloppe (1) à soufflets (2, 2A), dont au moins une partie des soufflets (2) sont radiaux, présentant à chaque extrémité ouverte une section (3A, 3B) de fixation au dispositif de transmission, ledit procédé consistant à mouler l'enveloppe (1) à soufflets (2, 2A), à l'aide d'un moule (5) en creux et d'au moins un noyau (4), présentant chacun au moins un filetage hélicoïdal complémentaire délimitant l'espace de moulage et à démouler l'enveloppe (1) formée par dévissage relatif de l'enveloppe (1) et du noyau (4) en vue de l'obtention d'une enveloppe monobloc,
**caractérisé en ce qu'**on donne au(x) noyau(x) (4) et à la carcasse du moule (5) une allure tronconique et **en ce qu'**on choisit la plus grande section du ou des noyau(x) (4) d'un diamètre inférieur ou égal à la section de passage de la section (3A) de fixation de plus grande dimension de l'enveloppe (1) à soufflets (2, 2A).

2. Procédé de fabrication d'une enveloppe (1) à soufflets (2, 2A) de protection selon la revendication 1,
**caractérisé en ce qu'**on moule par injection l'enveloppe (1) à partir d'un thermoplastique ou d'un élastomère thermoplastique.

3. Procédé de fabrication d'une enveloppe (1) à soufflets (2, 2A) de protection selon la revendication 1,
**caractérisé en ce qu'**on applique, soit au noyau (4), soit à l'enveloppe (1), un mouvement permettant un dévissage de l'enveloppe (1) du noyau (4), l'enveloppe (1) et/ou le noyau (4) comportant au moins une zone apte, soit à reprendre un couple mécanique lors du dévissage, soit à permettre un blocage en rotation.

4. Procédé de fabrication d'une enveloppe (1) à soufflets (2, 2A) de protection selon l'une des revendications 1 à 3, **caractérisé en ce qu'**on dévisse automatiquement l'enveloppe (1) par application d'une pression pneumatique de préférence sur une portion entre le noyau et l'enveloppe, cette pression pneumatique étant transmise par l'intermédiaire d'au moins un canal traversant le noyau de moulage.

5. Procédé de fabrication d'une enveloppe (1) à soufflets (2, 2A) de protection selon l'une des revendications 1 à 4, **caractérisé en ce qu'**on moule l'enveloppe (1) à l'aide d'au moins deux noyaux (4) présentant chacun un filetage hélicoïdal à pas différencié, de préférence croissant en direction de la partie de noyau destinée à s'étendre au voisinage de la section (3A) de fixation de plus grande dimension de l'enveloppe (1).

6. Procédé de fabrication d'une enveloppe (1) à soufflets (2, 2A) de protection selon l'une des revendications 1 à 4, **caractérisé en ce qu'**on applique une pression pneumatique entre le noyau (4) et l'enveloppe (1.), cette pression pneumatique étant transmise par l'intermédiaire d'au moins un canal traversant le noyau de moulage;

7. Enveloppe (1) à soufflets (2, 2A) de protection de dispositif de transmission, tel que joint de transmission, comprenant au moins deux arbres déplaçables axialement et/ou angulairement l'un par rapport à l'autre, cette enveloppe à soufflets, dont au moins une partie des soufflets sont radiaux, présentant à chaque extrémité ouverte, une section (3A, 3B) de fixation au dispositif de transmission, ladite enveloppe (1) étant obtenue notamment par la mise en oeuvre du procédé selon les revendications 1 à 6,
**caractérisée en ce qu'**elle se présente sous la forme d'un corps monobloc exempt de plan de joint intérieur axial, au moins une partie des soufflets (2) étant en disposition hélicoïdale et de diamètre progressif inscrits dans un tronc de cône, la section (3A) de fixation de plus grande dimension présentant une section de passage supérieure ou égale au diamètre délimité par le sommet du soufflet de plus grande dimension.

8. Enveloppe (1) à soufflets (2, 2A) de protection de dispositif de transmission selon la revendication 7, **caractérisée en ce que** les soufflets (2) radiaux sont constitués de passages spiralés simples ou multiples.

9. Enveloppe (1) à soufflets (2, 2A) de protection de dispositif de transmission selon l'une des revendications 7 et 8,
**caractérisée en ce que** l'enveloppe comporte au moins une zone destinée soit à reprendre un couple mécanique lors du dévissage, soit à permettre un blocage en rotation.

10. Enveloppe (1) à soufflets (2, 2A) de protection de dispositif de transmission selon l'une des revendications 7 à 9,
**caractérisée en ce que** le corps tubulaire de l'enveloppe est délimité sur au moins une partie de sa longueur par une paroi ondulée ou plissée, chaque pli correspondant à un soufflet, les plis décrivant une hélice à pas constant ou variable, de préférence croissant en direction de la section (3A) de fixation de plus grande dimension de l'enveloppe.

11. Enveloppe (1) à soufflets (2, 2A) de protection de dispositif de transmission selon l'une des revendications 7 et 8,
**caractérisée en ce que** l'enveloppe (1) comporte des soufflets axiaux (2A) et radiaux (2).

12. Enveloppe (1) à soufflets (2, 2A) de protection de dispositif de transmission selon l'une des revendications 7 à 11,
**caractérisée en ce que** chaque section (3A, 3B) de fixation de l'enveloppe (1) est constituée d'au moins deux matières bi-injectées.

## Claims

1. Method for production of an envelope (1) with bellows (2, 2A) for protection of a transmission device, such as a universal joint comprising at least two shafts which can be displaced axially and/or angularly relative to one another, this envelope (1) with bellows (2, 2A), at least part of the bellows (2) of which is radial, having at each open end a section (3A, 3B) for securing to the transmission device, the said method consisting of moulding the envelope (1) with bellows (2, 2A) by means of a hollow mould (5) and at least one core (4), each having at least one complementary helical thread which delimits the space for moulding and removal from the mould of the envelope (1) formed by relative unscrewing of the envelope (1) and the core (4), in order to obtain an envelope in a single piece, **characterised in that** the core(s) (4) and the carcass of the mould (5) are provided with a frusto-conical shape, and **in that** there is selection of the largest section of the core(s) (4) with a diameter equal to, or smaller than, the cross-section of passage of the securing section (3A) which has the largest dimension, of the envelope (1) with bellows (2, 2A).

2. Method for production of an envelope (1) with protective bellows (2, 2A) according to claim 1, **characterised in that** the envelope (1) is moulded by injection from a thermoplastic or a thermoplastic elastomer.

3. Method for production of an envelope (1) with protective bellows (2, 2A) according to claim 1,
**characterised in that** there is application either to the core (4) or to the envelope (1) of a movement which permits unscrewing of the envelope (1) of the core (4), the envelope (1) and/or the core (4) comprising at least one area which can either absorb mechanical moment during the unscrewing, or permit locking in rotation.

4. Method for production of an envelope (1) with protective bellows (2, 2A) according to one of claims 1 to 3, **characterised in that** the envelope (1) is unscrewed automatically by application of pneumatic pressure, preferably on a portion between the core and the envelope, the pneumatic pressure being transmitted by means of at least one channel which passes through the moulding core.

5. Method for production of an envelope (1) with protective bellows (2, 2A) according to one of claims 1 to 4, **characterised in that** the envelope (1) is moulded by means of at least two cores (4) which each have a helical thread with a differentiated pitch, which preferably increases in the direction of the part of the core which is designed to extend in the vicinity of the section (3A) for securing which has the largest dimension, of the envelope (1).

6. Method for production of an envelope (1) with protective bellows (2, 2A) according to one of claims 1 to 4, **characterised in that** pneumatic pressure is applied between the core (4) and the envelope (1), this pneumatic pressure being transmitted by means of at least one channel which passes through the moulding core.

7. Envelope (1) with bellows (2, 2A) for protection of a transmission device, such as a universal joint comprising at least two shafts which can be displaced axially and/or angularly relative to one another, this envelope with bellows, at least part of the bellows of which is radial, having at each open end a section (3A, 3B) for securing to the transmission device, the said envelope (1) being obtained in particular by implementation of the method according to claims 1 to 6, **characterised in that** it is in the form of a body in a single piece, which does not have an axial inner joint plane, at least part of the bellows (2) having a helical arrangement and a progressive diameter contained in a truncated cone, the securing section (3A) with the largest dimension having a cross-section of passage which is equal to, or larger than, the diameter which is delimited by the top of the bellows with the largest dimension.

8. Envelope (1) with bellows (2, 2A) for protection of a transmission device according to claim 7, **characterised in that** the radial bellows (2) consist of simple or multiple spiral passages.

9. Envelope (1) with bellows (2, 2A) for protection of a transmission device according to one of claims 7 and 8, **characterised in that** the envelope comprises at least one area which is designed either to absorb mechanical moment during the unscrewing, or to permit locking in rotation.

10. Envelope (1) with bellows (2, 2A) for protection of a transmission device according to one of claims 7 to 9, **characterised in that** the tubular body of the envelope is delimited along at least part of its length by an undulating or folded wall, each fold corresponding to bellows, the folds describing a helix which has a constant or variable pitch, which preferably increases in the direction of the securing section (3A) which has the largest dimension, of the envelope.

11. Envelope (1) with bellows (2, 2A) for protection of a transmission device according to one of claims 7 and 8, **characterised in that** the envelope (1) comprises axial (2A) and radial (2) bellows.

12. Envelope (1) with bellows (2, 2A) for protection of a transmission device according to one of claims 7 to 11, **characterised in that** each securing section (3A, 3B) of the envelope (1) consists of at least two bi-injected materials.

## Patentansprüche

1. Verfahren zur Herstellung eines Faltenbalges (1) mit Rippen (2, 2A) zum Schutz einer Übertragungsvorrichtung, beispielsweise eines Gelenkes mit mindestens zwei axial und/oder winklig gegeneinander verschiebbaren Wellen, wobei der Faltenbalg (1) mit Rippen (2, 2A), von denen mindestens ein Teil radial ist, an jedem offenen Ende einen Abschnitt (3A, 3B) zur Befestigung an der Übertragungsvorrichtung aufweist, wobei das Verfahren darin besteht, den Faltenbalg (1) mit Rippen (2, 2A) mit einer Hohlform (5) und mindestens einem Kern (4) zu formen, wobei jeder mindestens ein den Formraum begrenzendes zusätzliches Schraubengewinde aufweist, und den geformten Faltenbalg (1) durch gegenläufiges Drehen des Faltenbalges (1) und des Kernes (4) zu entformen, um einen einteiligen Faltenbalg zu erhalten, **dadurch gekennzeichnet, dass** der (die) Kern(e) (4) und der Rahmen der Form (5) kegelstumpfförmig ausgebildet sind und dass der größere Abschnitt des (der) Kerns (Kerne) (4) gewählt wird, dessen Durchmesser kleiner oder gleich dem des freien Durchgangs des größeren Befestigungsabschnittes (3A) des Faltenbalges (1) mit Rippen (2, 2A) ist.

2. Verfahren zur Herstellung eines Schutzfaltenbalges (1) mit Rippen (2, 2A) nach Anspruch 1, **dadurch gekennzeichnet, dass** der Faltenbalg (1) aus einem Thermoplast oder einem thermoplastischen Elastomer spritzgegossen wird.

3. Verfahren zur Herstellung eines Schutzfaltenbalges (1) mit Rippen (2, 2A) nach Anspruch 1, **dadurch gekennzeichnet, dass** entweder auf den Kern (4) oder auf den Faltenbalg (1) eine Bewegung aufgebracht wird, die ein Herausdrehen des Faltenbalges (1) aus dem Kern (4) ermöglicht, wobei der Faltenbalg (1) und/oder der Kern (4) mindestens einen Bereich umfassen, der geeignet ist, entweder beim Herausdrehen ein Moment aufzunehmen oder eine Verdrehsicherung zu ermöglichen.

4. Verfahren zur Herstellung eines Schutzfaltenbalges (1) mit Rippen (2, 2A) nach einem der Ansprüche 1 bis 3, **dadurch gekennzeichnet, dass** der Faltenbalg (1) durch Aufbringung eines pneumatischen Druckes vorzugsweise auf einen Abschnitt zwischen dem Kern und dem Faltenbalg automatisch herausgedreht wird, wobei der pneumatische Druck über mindestens einen durch den Gußkern verlaufenden Kanal übertragen wird.

5. Verfahren zur Herstellung eines Schutzfaltenbalges (1) mit Rippen (2, 2A) nach einem der Ansprüche 1 bis 4, **dadurch gekennzeichnet, dass** der Faltenbalg (1) mit mindestens zwei Kernen (4) geformt wird, von denen jeder ein Schraubengewinde mit konischer Steigung aufweist, das vorzugsweise in Richtung des Teils des Kernes zunimmt, der dafür vorgesehen ist, sich an dem größeren Befestigungsabschnitt (3A) des Faltenbalges (1) zu erstrecken.

6. Verfahren zur Herstellung eines Schutzfaltenbalges (1) mit Rippen (2, 2A) nach einem der Ansprüche 1 bis 4, **dadurch gekennzeichnet, dass** zwischen dem Kern (4) und dem Faltenbalg (1) ein pneumatischer Druck aufgebracht wird, wobei der pneumatische Druck über mindestens einen durch den Gußkern verlaufenden Kanal übertragen wird.

7. Faltenbalg (1) mit Rippen (2, 2A) zum Schutz einer Übertragungsvorrichtung, beispielsweise eines Gelenkes mit mindestens zwei axial und/oder winklig gegeneinander verschiebbaren Wellen, wobei der Faltenbalg mit Rippen, von denen mindestens ein Teil radial ist, an jedem offenen Ende einen Abschnitt zur Befestigung an der Übertragungsvorrichtung aufweist, wobei der Faltenbalg (1) insbesondere mit dem Verfahren nach den Ansprüchen 1 bis 6 hergestellt wird, **dadurch gekennzeichnet, dass** er als einteiliger Körper ohne innere axiale Trennebene ausgebildet ist, wobei mindestens ein Teil der Rippen (2) als Kegelstumpf schraubenförmig angeordnet ist und einen steigenden Durchmesser aufweist, wobei der größere Befestigungsabschnitt (3A) einen freien Durchgang aufweist, der größer oder gleich dem Durchmesser ist, der von dem Scheitelpunkt der größeren Rippe begrenzt ist.

8. Faltenbalg (1) mit Rippen (2, 2A) zum Schutz einer Übertragungsvorrichtung nach Anspruch 7, **dadurch gekennzeichnet, dass** die radialen Rippen (2) aus einfach oder mehrfach spiralförmigen Durchgängen bestehen.

9. Faltenbalg (1) mit Rippen (2, 2A) zum Schutz einer Übertragungsvorrichtung nach einem der Ansprüche 7 und 8, **dadurch gekennzeichnet, dass** der Faltenbalg mindestens einen Bereich umfasst, der dafür vorgesehen ist, entweder beim Herausdrehen ein Moment aufzunehmen oder eine Verdrehsicherung zu ermöglichen.

10. Faltenbalg (1) mit Rippen (2, 2A) zum Schutz einer Übertragungsvorrichtung nach einem der Ansprüche 7 bis 9, **dadurch gekennzeichnet, dass** der rohrförmige Körper des Faltenbalges über mindestens einen Teil seiner Länge von einer gewellten oder gefalteten Wandung begrenzt ist, wobei jede Falte einer Rippe entspricht und die Falten eine Schraube mit konstanter oder variabler Steigung beschreiben, die vorzugsweise in Richtung des größeren Befestigungsabschnittes (3A) des Faltenbalges ansteigt.

11. Faltenbalg (1) mit Rippen (2, 2A) zum Schutz einer Übertragungsvorrichtung nach einem der Ansprüche 7 und 8, **dadurch gekennzeichnet, dass** der Faltenbalg (1) axiale (2A) und radiale Rippen (2) umfasst.

12. Faltenbalg (1) mit Rippen (2, 2A) zum Schutz einer Übertragungsvorrichtung nach einem der Ansprüche 7 bis 11, **dadurch gekennzeichnet, dass** jeder Befestigungsabschnitt (3A, 3B) des Faltenbalges (1) aus mindestens zwei im Zweikomponentenspritzgussverfahren verarbeiteten Werkstoffen besteht.
